# EUROPÄISCHE PATENTSCHRIFT

(11) **EP 2 693 170 B1**
(45) Veröffentlichungstag und Bekanntmachung des Hinweises auf die Patenterteilung: **24.09.2014**
(21) Anmeldenummer: 12178652.9
(22) Anmeldetag: 31.07.2012
(51) Int. Cl.: G01D 5/347, F16D 1/12

(54) **Statorkupplung**
Stator coupling
Couplage de stator

(43) Veröffentlichungstag der Anmeldung: 05.02.2014
(73) Patentinhaber: SICK STEGMANN GmbH, 78166 Donaueschingen (DE)
(72) Erfinder: Beha, Marc, 78176 Blumberg (DE); Tabler, Eduard, 78056 Villingen-Schwenningen (DE); Girke, Jürgen, 88662 Überlingen (DE)
(74) Vertreter: Ludewigt, Christoph

(56) Entgegenhaltungen:
- EP-A2- 1 353 150
- DE-A1-102006 038 981

## Beschreibung

Die Erfindung betrifft eine Statorkupplung gemäß dem Oberbegriff des Patentanspruchs 1.

Statorkupplungen dieser Gattung werden dazu verwendet, zwei Bauteile drehsteif miteinander zu verbinden, wobei die Statorkupplung jedoch toleranzbedingte radiale und axiale Relativbewegungen der beiden Bauteile zulässt. Häufig werden solche Statorkupplungen bei Drehgebern verwendet, die an Motoren angebaut werden. Die Drehgeberwelle wird dabei starr mit der zu messenden Motorwelle verbunden. Die auf der Drehgeberwelle gelagerte Abtastung muss dabei möglichst drehsteif mit dem Motorgehäuse verbunden werden. Die Statorkupplung dient dabei dazu, unvermeidliche Fluchtungsfehler zwischen der Drehgeberwelle und der Motorwelle und eventuelle axiale Bewegungen (z. B. durch Wärmeausdehnung) der Motorwelle aufzunehmen. Die Statorkupplung kann hierzu z. B. zwischen dem Motorgehäuse und dem Drehgebergehäuse angeordnet sein oder zwischen dem fest am Motorgehäuse montierten Drehegebergehäuse und der Abtastung.

Aus der DE 89 15 109 U1 ist eine Statorkupplung bekannt, die als einstückiges Stanz- und Biegeteil aus einem Federstahlblech hergestellt ist. Die Statorkupplung weist eine ringscheibenförmige ebene Basisfläche mit einem mittigen Durchbruch auf, an welcher diametral zueinander angeordnete Paare von Laschen angeformt sind, die aus der Ebene der Basisfläche gebogen werden und Montagepunkte zur Befestigung an den Bauteilen aufweisen. Die beiden Paare von Laschen bilden jeweils ein Federparallelogramm, welches eine radiale Auslenkung in der Ebene der Basisfläche in zueinander senkrechten Richtungen zulässt. Die federnd biegsamen Laschen beeinflussen bei ihrer elastischen Verformung die Winkelgenauigkeit der Statorkupplung.

Um die Drehsteifigkeit der Statorkupplung zu verbessern, weisen gemäß EP 0 762 081 B1 die Laschen jeweils zwei in Umfangsrichtung gegeneinander beabstandete Montagepunkte auf. Die Laschen sind mittig zwischen ihren beiden Montagepunkten an der Basisfläche angesetzt. Die doppelte Anzahl der Montagepunkte macht die Montage der Statorkupplung aufwändig. Eine radiale und axiale Bewegung der Statorkupplung beeinflusst die Winkelgenauigkeit.

Aus der EP 1 203 203 B1 insbesondere Figur 8 ist eine Statorkupplung bekannt, bei welcher die Laschen als in Umfangsrichtung angeordnete Streifen ausgebildet sind, die an ihren beiden Enden an der Basisfläche angeformt sind. Der Montagepunkt ist jeweils mittig an den Laschen angeordnet. Diese Ausbildung der Laschen verbessert die Drehsteifigkeit und damit die Winkelgenauigkeit. Die Statorkupplung lässt jedoch nur sehr geringe Toleranzen im Hinblick auf radiale und axiale Bewegungen zu.

Der Erfindung liegt die Aufgabe zugrunde, eine Statorkupplung zu schaffen, die eine hohe Drehsteifigkeit und damit eine hohe Winkelgenauigkeit aufweist und große Toleranzen in Bezug auf radialen und axialen Versatz aufnehmen kann.

Diese Aufgabe wird erfindungsgemäß gelöst durch eine Statorkupplung mit den Merkmalen des Patentanspruchs 1.

Vorteilhafte Ausführungen der Erfindung sind in den Unteransprüchen angegeben.

Die Erfindung betrifft eine Statorkupplung zur drehsteifen Verbindung zweier Bauteile, die radiale und axiale Relativbewegungen innerhalb von Toleranzgrenzen zulässt, mit einer ebenen Basisfläche, mit an der Basisfläche ansetzenden ersten Laschen, die ein Paar in einer ersten Achse diametral zueinander angeordneter erster Montagepunkte zur Befestigung an dem einen Bauteil aufweisen, und mit an der Basisfläche ansetzenden und aus der Ebene der Basisfläche gebogenen zweiten Laschen, die ein Paar in einer zweiten Achse diametral zueinander angeordneter zweiter Montagepunkte zur Befestigung an dem anderen Bauteil aufweisen, wobei die erste Achse und die zweite Achse in der Ebene der Basisfläche etwa senkrecht zueinander verlaufen und wobei die Basisfläche jeweils zwischen den Montagepunkten geradlinige Kanten aufweist.

Bei der erfindungsgemäßen Statorkupplung weist die Basisfläche geradlinige Kanten auf, so dass die Außenkontur ein Vieleck bildet. Die zweiten Montagepunkte sind an jeweils zwei zweiten Laschen angeordnet, die an in Umfangsrichtung aufeinanderfolgenden Kanten ansetzen und an diesen Kanten als Biegekante aus der Ebene der Basisfläche abgebogen sind. Die zweiten Laschen sind nochmals um eine zu der Kante parallele zweite Biegekante abgebogen, so dass sie in einem zur Ebene der Basisfläche flächenparallelen Flansch enden. Der Flansch wird durch eine ebene Fläche gebildet und weist ggf. Befestigungsmittel auf. Die zwei Laschen der aneinander anschließenden Kanten sind miteinander verbunden oder überlappen sich an der durch die zwei Kanten gebildeten Ecke der Basisfläche mit ihren Flanschen, wobei der zugehörige Montagepunkt an den zwei sich überlappenden Flanschen gemeinsam ausgebildet ist oder an der Verbindungsstelle angeordnet ist. Die Biegekanten können so ausgebildet sein, dass der Flansch Z-förmig oder S-förmig abgekröpft nach außen weist. Bevorzugt wird eine Ausführung, bei welcher die Biegekanten so ausgebildet sind, dass der Flansch nach innen gerichtet ist, wodurch sich für die zweiten Laschen ein im Querschnitt nach innen offenes U-förmiges bzw. C-förmiges Profil ergibt.

Die zweiten Laschen erstrecken sich mit ihrem zweifach abgebogenen Profil im Wesentlichen über die gesamte Länge der Kanten von dem gemeinsamen zweiten Montagepunkt bis zu der jeweils anschließenden ersten Lasche. Durch dieses zweifach abgebogene Profil ergibt sich zwischen den ersten Montagepunkten und den zweiten Montagepunkten jeweils eine geradlinige Verbindung in Richtung der in die Kupplung eingeleiteten Rotationskräfte mit einer hohen Steifigkeit, wodurch eine entsprechend hohe Steifigkeit und Winkelgenauigkeit der Statorkupplung erreicht wird.

Die ersten Laschen sind einfache aus der Ebene der Basisfläche abgebogene Laschen mit jeweils einem Montagepunkt. Die ersten Laschen können einfach senkrecht aus der Ebene der Basisfläche abgebogen sein, wenn eine radiale Befestigung mittels der Montagepunkte gefordert ist. Alternativ können die ersten Laschen nach innen oder nach außen abgekröpft sein, so dass sie einen zur Ebene der Basisfläche flächenparallelen Flansch für die Montagepunkte aufweisen, sofern eine axiale Befestigung der ersten Laschen gefordert ist. Die ersten Laschen erlauben eine große radiale Bewegungstoleranz in der Richtung ihrer gedachten diametralen Verbindungslinie (X-Achse).

Die zweiten Laschen weisen aufgrund ihrer zweifachen Biegekanten eine ausreichende radiale Flexibilität auf, um auch radiale Toleranzen in der Richtung der gedachten Verbindungslinie (Y-Achse) der zweiten Montagepunkte aufzunehmen.

Zusätzlich kann die Statorkupplung große axiale Bewegungen aufnehmen, wie sie beispielsweise gefordert werden, wenn ein Drehgeber an einen Motor angebaut wird und Wärmeausdehnungen der Motorwelle kompensiert werden müssen. Der Axialversatz, den die Statorkupplung aufnehmen kann, wird vorzugsweise dadurch vergrößert, dass die Basisfläche zwischen den ersten Laschen und den zweiten Laschen jeweils materialreduzierte Sollbiegestellen aufweist. Diese Sollbiegestellen erlauben eine elastische axiale gegenseitige Verformung der Bereiche der Basisfläche, die die ersten Laschen und die zweiten Laschen aufweisen. Diese Laschen mit ihren jeweiligen Montagepunkten können sich somit axial gegeneinander bewegen, ohne dass hierdurch eine Winkelverschiebung der Laschen und damit eine Winkelungenauigkeit entsteht. Die Materialreduzierung kann in unterschiedlicher Weise erreicht werden. Beispielsweise können in die Oberfläche der Basisfläche Kerben eingeprägt werden, die die Materialdicke der Basisfläche reduzieren. Eine einfache Realisierung der Materialreduzierung wird dadurch erreicht, dass die Breite der Basisflächen durch ausgestanzte Einbuchtungen reduziert wird.

Eine besonders einfache und kostengünstige Herstellung der Statorkupplung ist möglich, wenn die gesamte Statorkupplung als einstückiges Stanz- und Biegeteil aus einem geeigneten Federblech hergestellt wird. Es ist jedoch auch möglich, die Statorkupplung aus mehreren Teilen zusammenzusetzen, so dass beispielsweise die die Laschen bildenden Teile getrennt hergestellt und dann mit der Basisfläche zu der Statorkupplung zusammengesetzt, z. B. zusammengeschweißt werden.

Im Folgenden wird die Erfindung anhand eines in der Zeichnung dargestellten Ausführungsbeispiels näher erläutert. Es zeigen:
- Figur 1: eine Draufsicht auf die Unterseite der Statorkupplung,
- Figur 2: eine Seitenansicht von links in Figur 1,
- Figur 3: eine Draufsicht auf die Oberseite der Statorkupplung,
- Figur 4: eine Seitenansicht von unten in Figur 3,
- Figur 5: eine perspektivische Darstellung der Statorkupplung,
- Figur 6: ein Stanzteil für die Herstellung der Statorkupplung,
- Figur 7: eine perspektivische Ansicht der Statorkupplung in einer abgewandelten Ausführung von oben und
- Figur 8: die Statorkupplung gemäß Figur 7 von unten.

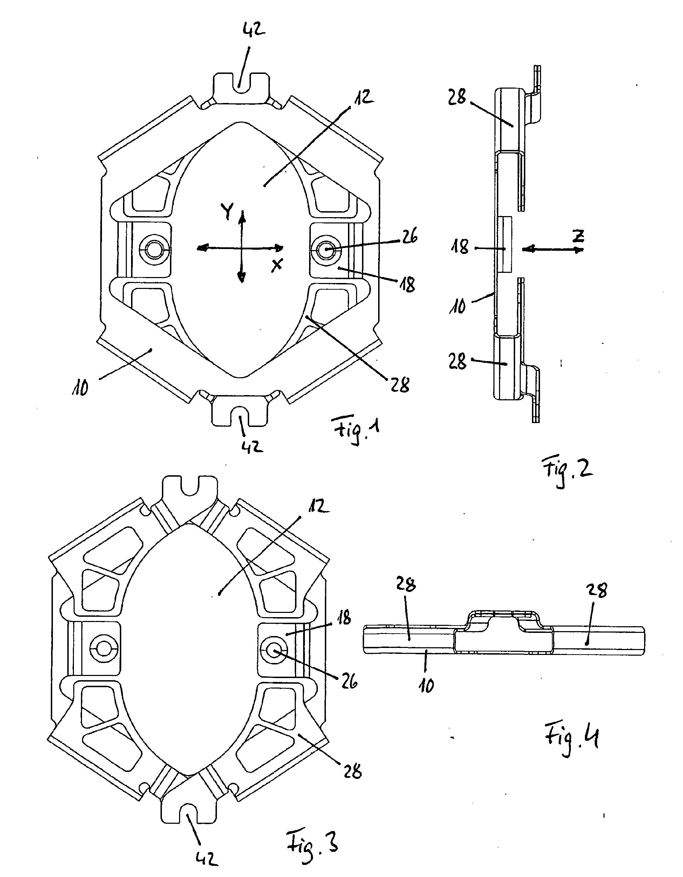

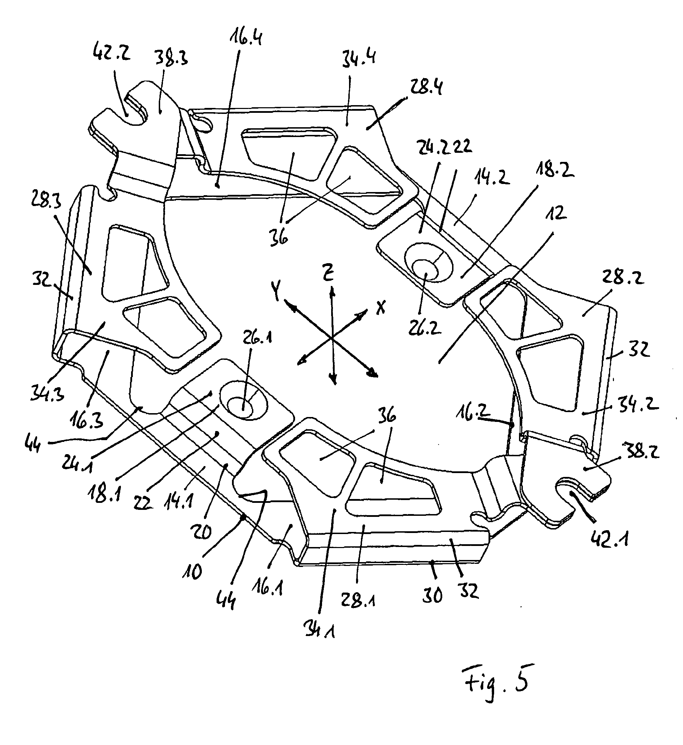

Eine erste Ausführung der Statorkupplung gemäß der Erfindung wird nachfolgend anhand der Figuren 1 bis 6 beschrieben.

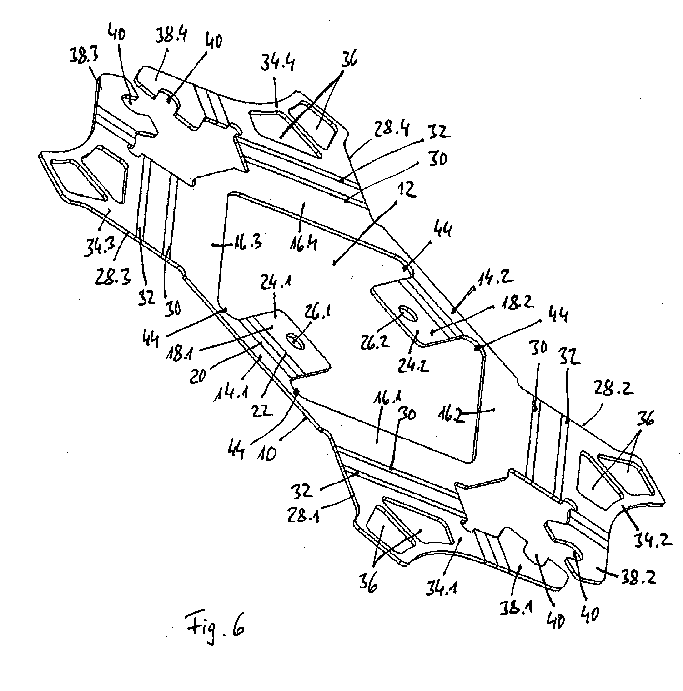

In dieser Ausführung ist die Statorkupplung als einstückiges Stanz-Biege-Teil aus einem federelastischen Blech, insbesondere aus einem Federstahlblech hergestellt. Zunächst wird aus einem ebenen Blech ein Stanzteil ausgestanzt, wie dies in Figur 6 gezeigt ist. Aus diesem Stanzteil wird die Statorkupplung in der nachfolgend beschriebenen Weise gebogen, um die in den Figuren 1 bis 5 gezeigte Form zu erhalten.

Die Statorkupplung weist eine ebene Basisfläche 10 auf, die einen großflächigen mittigen Durchbruch 12 aufweist, durch welchen die nicht dargestellten Rotorelemente hindurchgeführt werden. Die Basisfläche 10 weist eine vieleckige Außenkontur auf, in dem dargestellten Ausführungsbeispiel eine sechseckige Außenkontur. Zwischen den Außenkanten der Basisfläche 10 und dem Durchbruch 12 werden dadurch schmale Streifen 14 und 16 des Federblech-Materials gebildet. Zwei erste Streifen 14.1 und 14.2 laufen parallel zueinander und sind in einer ersten in der Ebene der Basisfläche 10 liegenden X-Achse beabstandet. An diese ersten Streifen 14.1 und 14.2 schließen sich einerends zweite Streifen 16.1 und 16.2 und anderenends zweite Streifen 16.3 und 16.4 an. Die zweiten Streifen 16.1 und 16.2 verlaufen geradlinig und stoßen in einer Vieleck-Ecke unter einem Winkel von etwa 80° bis 120° zusammen. Die zweiten Streifen 16.3 und 16.4 verlaufen ebenfalls geradlinig und stoßen unter einem Winkel in einer Vieleck-Ecke zusammen. Die Streifen 16.1 und 16.2 und die Streifen 16.3 und 16.4 sind spiegelbildlich in Bezug auf die X-Achse ausgebildet, so dass die Vieleck-Ecke der zweiten Streifen 16.1 und 16.2 und die Vieleck-Ecke der zweiten Streifen 16.3 und 16.4 diametral zueinander auf einer Y-Achse liegen, welche zu der X-Achse senkrecht verläuft.

An den ersten Streifen 14.1 und 14.2 setzt jeweils eine erste Lasche 18.1 bzw. 18.2 an. Die ersten Laschen 18 sind einstückig an der Basisfläche 10 angeformt. Im dargestellten Ausführungsbeispiel sind die ersten Laschen 18 so angeordnet, dass sie an der Seite des Durchbruchs 12 innen an dem jeweiligen ersten Streifen 14 angesetzt sind. Die ersten Laschen 18 sind um eine zur Kante der ersten Streifen 14 parallele erste Biegekante 20 aus der Ebene der Basisfläche 10 hochgebogen. Um eine zur ersten Biegekante 20 parallele zweite Biegekante 22 sind die Laschen 18 wiederum nach innen abgebogen, so dass sie in einem Flansch 24.1 bzw. 24.2 auslaufen, der zur Basisfläche 10 flächenparallel verläuft. In den Flanschen 24.1 und 24.2 ist jeweils ein erster Montagepunkt 26.1 bzw. 26.2 vorgesehen, der z. B. als Bohrung für eine Schraubbefestigung der Statorkupplung ausgebildet ist. Die ersten Montagepunkte 26.1 und 26.2 liegen diametral zueinander auf der X-Achse.

Im dargestellten Ausführungsbeispiel sind die ersten Laschen 18 an der Innenkante der ersten Streifen 14 angesetzt und Z-förmig gebogen, so dass die Flansche 24 nach innen in den Durchbruch 12 gerichtet sind. Alternative Ausführungen sind möglich. Die ersten Laschen 18 können auch S-förmig oder U-förmig gebogen sein und können auch an der Außenkante der ersten Streifen 14 ansetzen. In allen diesen Fällen liegen die ersten Montagepunkte 26 in einem Flansch 24, der zur Ebene der Basis 16 flächenparallel verläuft. Die ersten Montagepunkte 26 dienen hierbei zu einer axialen Befestigung der Statorkupplung an einem Bauteil. Es ist auch eine Alternative möglich, bei welcher die ersten Laschen 18 nur um eine erste Biegekante 20 aus der Basisfläche 10 gebogen sind, so dass sie im Wesentlichen senkrecht zur Ebene der Basisfläche 10 stehen. Die ersten Montagepunkte 26 der ersten Laschen 18 dienen in dieser Ausführung zu einer radialen Befestigung der Statorkupplung mittels der ersten Lasche 18 an einem der miteinander zu verbindenden Bauteile.

An den zweiten Streifen 16.1, 16.2, 16.3 und 16.4 sind jeweils zweite Laschen 28.1, 28.2, 28.3 und 28.4 einstückig angesetzt. Im dargestellten Ausführungsbeispiel sind die zweiten Laschen 28 jeweils an den Außenkanten der zweiten Streifen 16 der Basisfläche 10 angesetzt.

Die zweiten Laschen 28 sind jeweils um eine erste Biegekante 30 aus der Ebene der Basisfläche 10 abgebogen, wobei diese erste Biegekante 30 mit der geradlinigen Außenkante des jeweiligen Seitenstreifens 16 zusammenfällt. Die zweiten Laschen 28 sind dann um eine zweite Biegekante 32 gebogen, die zu der ersten Biegekante 30 und damit zur Außenkante des Streifens 16 parallel verläuft. Durch das zweimalige Abbiegen der zweiten Laschen 28 ergeben sich zu der Basisfläche 10 flächenparallale Flansche 34. In der in der Zeichnung dargestellten Ausführung sind die ersten Biegekanten 30 und die zweiten Biegekanten 32 so ausgebildet, dass die Flansche 34 nach innen gegen den Durchbruch 12 hin gerichtet sind, so dass sich für die zweiten Laschen 28 insgesamt ein nach innen gegen den Durchbruch 12 hin offenes U-Profil bzw. C-Profil ergibt. Alternativ können auch die zweiten Laschen 28 Z-förmig oder S-förmig gebogen sein, so dass die Flansche 34 nach außen gerichtet sind.

Die zweiten Laschen 28 erstrecken sich mit ihren Biegekanten 30 und 32 über die gesamte Länge des jeweiligen Streifens 16, so dass sich zusammen mit dem zweifach gebogenen Profilquerschnitt der zweiten Laschen 28 eine hohe Längssteifigkeit in Richtung der zweiten Streifen 16 ergibt.

Zur Einsparung von Material und zur Gewichtsreduzierung weisen die Flansche 34 Flächendurchbrüche 36 auf, so dass die Flansche 34 im Wesentlichen durch die Längssteifigkeit bewirkende Streben gebildet sind.

Die Flansche 34.1 und 34.2 weisen an ihren einander zugewandten Enden jeweils eine einstückig angeformte Fahne 38.1 bzw. 38.2 auf. Wenn die zweiten Laschen 28 zu ihrem U-förmigen Profil gebogen sind, so überlappen sich die Fahnen 38.1 und 38.2 in der Vieleck-Ecke. In dem überlappenden Bereich der Fahnen 38.1 und 38.2 kommen diese mit jeweiligen Aussparungen 40.1 bzw. 40.2 zur Deckung. Die sich überlappenden Aussparungen 40.1 und 40.2 bilden einen für die zweiten Laschen 28.1 und 28.2 gemeinsamen zweiten Montagepunkt 42.1. In spiegelsymmetrischer Weise überlappen sich die Flansche 34.3 und 34.4 mit einander zugewandten Fahnen 38.3 und 38.4, die mit ihren jeweiligen Aussparungen 40.3 und 40.4 einen für die zweiten Laschen 28.3 und 28.4 gemeinsamen zweiten Montagepunkt 42.2 bilden. Die zweiten Montagepunkte 42.1 und 42.2 liegen diametral zueinander auf der Y-Achse. Die zweiten Montagepunkte 42.1 und 42.2 dienen zur Befestigung der Statorkupplung an dem anderen der beiden Bauteile. Die Befestigung kann z.B. durch in die Aussparungen 40 eingesetzte Schrauben erfolgen.

Die Fahnen 38 können gegebenenfalls aus der Ebene der Flansche 34 abgekröpft hochgebogen sein, wodurch eine Höhenanpassung beim Einbau der Statorkupplung möglich ist.

Die Statorkupplung erlaubt aufgrund des durch die ersten Laschen 18 gebildeten Federparallelogramms eine gegenseitige radiale Bewegung der durch die Statorkupplung verbundenen Bauteile in der X-Achse. Die zweiten Laschen 28 erlauben eine radiale Bewegung der miteinander verbundenen Bauteile in der Y-Achse. Dabei ist die Biegsamkeit der zweiten Laschen 28 durch die zwei Biegekanten 30 und 32 ausreichend, um einen Toleranzausgleich in der radialen Richtung der Y-Achse zu erlauben. Die hohe Längssteifigkeit des U-förmigen Profils der zweiten Laschen 28 gewährleistet dabei eine hohe Steifigkeit in Richtung der Verbindungslinien zwischen den ersten Montagepunkten 26 und den zweiten Montagepunkten 42, so dass die Statorkupplung insgesamt eine hohe Drehsteifigkeit aufweist und eine winkeltreue Kupplung der zwei Bauteile mit hoher Genauigkeit bewirkt.

Einen bei der Kupplung der zwei Bauteile gegebenenfalls auftretenden Axialversatz in der zur Ebene der Basisfläche 10 senkrechten Z-Achse nimmt die Basisfläche 10 in dem Übergangsbereich zwischen dem ersten Streifen 14.1 und den angrenzenden zweiten Streifen 16.1 und 16.3 sowie zwischen dem ersten Streifen 14.2 und den angrenzenden zweiten Streifen 16.2 und 16.4 durch elastische Verformung auf. Die elastische Verformbarkeit der Basisfläche 10 in diesen Bereichen kann noch dadurch verbessert werden, dass in diesen Bereichen eine Materialreduzierung vorgesehen ist, die den Verformungsquerschnitt der Basisfläche 10 in diesen Bereichen verringert. Eine solche Materialreduzierung kann beispielsweise durch in die Oberfläche der Basisfläche 10 eingeprägte Kerben bewirkt werden. Vorzugsweise wird die Materialreduzierung durch Einbuchtungen 44 erreicht, die die Breite der ersten Streifen 14.1 und 14.2 beiderseits der ersten Lasche 18.1 bzw. 18.2 verringern. Diese Einbuchtungen 44 können bereits beim Ausstanzen des Durchbruchs 12 des in Figur 6 gezeigten Stanzteils hergestellt werden. Durch die Materialreduzierung beiderseits der ersten Laschen 18 werden Soll-Biegestellen erzeugt, die einen hohen Axialversatz zwischen den ersten Laschen 18 und den zweiten Laschen 28 und damit zwischen den durch die Statorkupplung verbundenen Bauteilen ermöglichen, ohne dass dadurch ein Winkelfehler zwischen den ersten Montagepunkten 26 und den zweiten Montagepunkten 42 und damit zwischen den durch die Statorkupplung verbundenen Bauteilen auftritt.

Bei dem in Figur 1 bis 6 dargestellten Ausführungsbeispiel ist die Statorkupplung als einstückiges Stanz-Biege-Teil oder einstückiges Laser-Schweißteil hergestellt. Diese Ausführung ist in Bezug auf die Herstellungskosten und die Masse der Statorkupplung vorteilhaft. Die Vorteile der hohen Winkelsteifigkeit und der geringen Winkelfehler, insbesondere auch bei großen axialen Versätzen, können jedoch auch bei einer mehrteiligen Ausführung erreicht werden. Bei einer solchen mehrteiligen Ausführung ist beispielsweise die Basisfläche 10 als ein separates Stanzteil hergestellt. Die Laschen 18 und 28 können ebenfalls als separate Stanz-Biege-Teile hergestellt werden und auf der Basisfläche 10 befestigt werden, insbesondere beispielsweise auf die Basisfläche 10 aufgeschweißt werden. Ebenso ist es möglich, entweder die ersten Laschen 18 oder die zweiten Laschen 28 einstückig an der Basisfläche 10 anzusetzen und jeweils die anderen Laschen als gesonderte Stanz-Biege-Teile herzustellen und an der Basisfläche 10 zu befestigen.

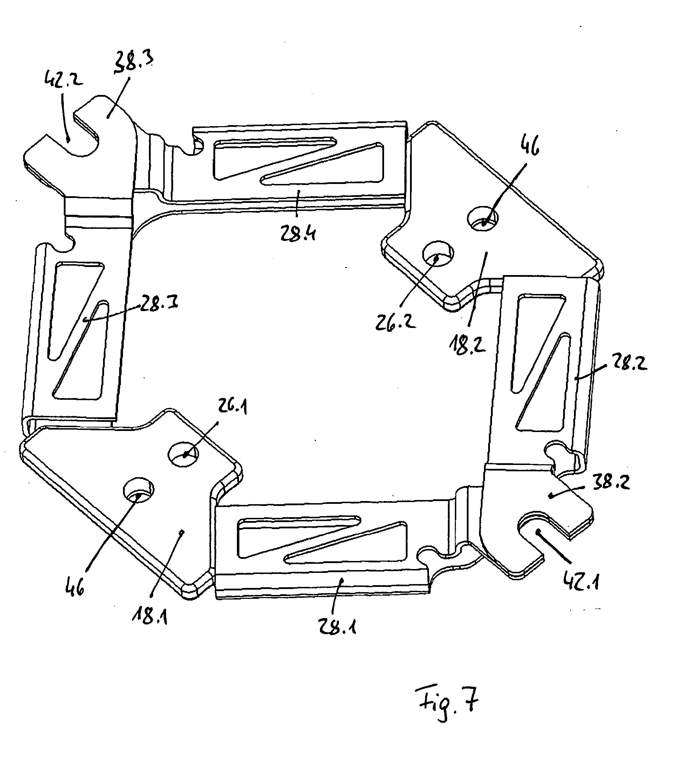

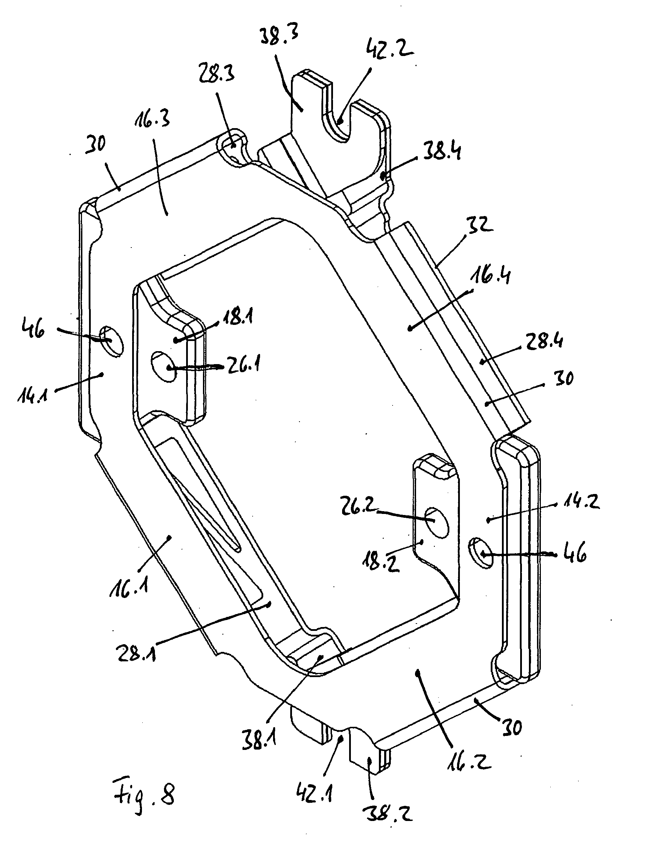

In den Figuren 7 und 8 ist ein Beispiel einer solchen mehrteiligen Ausführung gezeigt. Soweit dieses Ausführungsbeispiel mit dem vorangehend beschriebenen Ausführungsbeispiel der Figuren 1 bis 6 übereinstimmt, wird auf die vorangehende Beschreibung verwiesen, die auch auf das Ausführungsbeispiel der Figuren 7 und 8 zutrifft.

In dem Ausführungsbeispiel der Figuren 7 und 8 ist die Basisfläche 10 mit den zweiten Laschen 28 als einstückiges Stanz-Biege-Teil hergestellt, wie dies vorstehend beschrieben ist. Die ersten Laschen 18 sind in dieser mehrteiligen Ausführung jedoch nicht einstückig an den ersten Streifen 14 angesetzt, sondern werden als gesonderte Stanz-Biege-Teile hergestellt. Diese gesondert hergestellten ersten Laschen 18.1 und 18.2 werden jeweils auf die schmalen zweiten Streifen 14.1 bzw. 14.2 aufgesetzt und mittels Schweißpunkten 46.1 bzw. 46.2 auf den Streifen 14.1 bzw. 14.2 befestigt.

Das gesonderte Herstellen der ersten Laschen 18 und/oder auch der zweiten Laschen 28 und das anschließende Befestigen dieser Laschen auf der Basisfläche 10 bedeutet einen etwas höheren Herstellungsaufwand. Dieser höhere Aufwand kann jedoch gegebenenfalls dadurch kompensiert werden, dass die separat hergestellten ersten Laschen 18 und/oder zweiten Laschen 28 unterschiedlich gestaltet werden können und mit einem einheitlichen einstückigen Stanz-Biege-Teil verbunden werden können, welches aus der Basisfläche 10 und gegebenenfalls einstückig an dieser Basisfläche 10 angesetzten Laschen 18 bzw. 28 besteht. Im Ausführungsbeispiel der Figuren 7 und 8 kann so beispielsweise eine Reihe von Statorkupplungen hergestellt werden, die alle einheitlich in der Basisfläche 10 und den an dieser einstückig angesetzten zweiten Laschen 28 übereinstimmen, bei denen jedoch die gesondert hergestellten und an der Basisfläche 10 angeschweißten ersten Laschen 18 unterschiedlich gestaltet sind. Dadurch ist es möglich, die Statorkupplung in günstiger Weise unterschiedlichen Anwendungsfällen anzupassen. Wird beispielsweise die Statorkupplung eingesetzt, um das Gehäuse eines Drehgebers drehsteif an dem Gehäuse eines Motors anzubauen, so können die Basisfläche 10 und die zur Montage an dem Drehgebergehäuse dienenden Laschen einheitlich einstückig hergestellt werden, während die Anpassung für die Montage an verschiedenen Motortypen durch separat hergestellte und an der Basisfläche 10 angeschweißte unterschiedliche Laschen ermöglicht wird.

Die erfindungsgemäße Statorkupplung kann nicht nur radiale Versätze, sondern auch große axiale Versätze in einem großen Toleranzbereich aufnehmen, wobei nur sehr geringe Winkelfehler auftreten. Die Statorkupplung weist eine geringe Masse und damit nur eine geringe Winkelträgheit auf. Aufgrund dieser geringen Winkelträgheit bzw. geringen Masse eignet sich die Statorkupplung insbesondere für die Verwendung bei Drehgebern in Regelsystemen. Der Drehgeber als Sensor des Regelsystems kann schnell und mit einer hohen Resonanzfrequenz auf Drehzahländerungen des Motors reagieren, so dass eine "harte" Regelung möglich ist.

### Bezugszeichenliste

- 10: Basisfläche
- 12: Durchbruch
- 14: erste Streifen
- 16: zweite Streifen
- 18: erste Laschen

- 20: erste Biegekante von 18
- 22: zweite Biegekante von 18
- 24: Flansch von 18
- 26: erster Montagepunkt
- 28: zweite Laschen

- 30: erste Biegekante von 28
- 32: zweite Biegekante von 28
- 34: Flansche von 28
- 36: Flächendurchbrüche
- 38: Fahnen

- 40: Aussparungen
- 42: zweiter Montagepunkt
- 44: Einbuchtungen
- 46: Schweißpunkte

## Patentansprüche

1. Statorkupplung zur drehsteifen Verbindung zweier Bauteile, die radiale und axiale Relativbewegungen innerhalb von Toleranzgrenzen zulässt, mit einer ebenen Basisfläche (10), mit an der Basisfläche (10) ansetzenden ersten Laschen (18.1, 18.2), die ein Paar in einer ersten Achse (X-Achse) diametral zueinander angeordneter erster Montagepunkte (26.1, 26.2) zur Befestigung an dem einen Bauteil aufweisen, und mit an der Basisfläche (10) ansetzenden und aus der Ebene der Basisfläche (10) gebogenen zweiten Laschen (28), die ein Paar in einer zweiten Achse (Y-Achse) diametral zueinander angeordneter zweiter Montagepunkte (42.1, 42.2) zur Befestigung an dem anderen Bauteil aufweisen, wobei die erste Achse (X-Achse) und die zweite Achse (Y-Achse) in der Ebene der Basisfläche (10) etwa senkrecht zueinander verlaufen und wobei die Basisfläche (10) jeweils zwischen den Montagepunkten (26, 42) geradlinige Kanten aufweist,
**dadurch gekennzeichnet, dass** die zweiten Laschen (28.1, 28.2, 28.3, 28.4) an den geradlinigen Kanten der Basisfläche (10) ansetzen und zu der jeweiligen Kante parallele Biegekanten (30, 32) mindestens zweimal abgebogen sind, wodurch ein zu der Basisfläche (10) flächenparalleler Flansch (34.1, 34.2, 34.3, 34.4) gebildet wird, und dass jeweils zwei zweite Laschen (28.1 und 28.2 bzw. 28.3 und 28.4), die an in Umfangsrichtung aufeinanderfolgenden Kanten ansetzen, sich mit den einander zugewandten Enden ihrer Flansche (34.1 und 34.2 bzw. 34.3 und 34.4) überlappen oder verbunden sind und diese Enden jeweils gemeinsam einen der zweiten Montagepunkte (42.1 bzw. 42.2) aufweisen.

2. Statorkupplung nach Anspruch 1, **dadurch gekennzeichnet, dass** die ersten Laschen senkrecht aus der Ebene der Basisfläche abgebogen sind.

3. Statorkupplung nach einem der vorhergehenden Ansprüche, **dadurch gekennzeichnet, dass** die ersten Laschen nach innen oder nach außen abgekröpft sind, so dass sie einen zur Ebene der Basisfläche flächenparallelen Flansch für die Montagepunkte aufweisen.

4. Statorkupplung nach einem der vorhergehenden Ansprüche , **dadurch gekennzeichnet, dass** die Basisfläche (10) eine vieleckige, insbesondere sechseckige Kontur aufweist, dass die ersten Laschen (18.1, 18.2) an zwei einander gegenüberliegenden parallelen Seiten der Basisfläche (10) ansetzen und dass die zweiten Laschen (28.1, 28.2 bzw. 28.3, 28.4) an den in zwei einander gegenüberliegenden Ecken zusammenstoßenden Seiten der Basisfläche (10) ansetzen.

5. Statorkupplung nach einem der vorhergehenden Ansprüche, **dadurch gekennzeichnet, dass** die Basisfläche (10) zwischen den ersten Laschen (18.1 bzw. 18.2) und den zweiten Laschen (28.1 und 28.3 bzw. 28.2 und 28.4) jeweils eine materialreduzierte Soll-Biege-Stelle aufweist.

6. Statorkupplung nach Anspruch 5, **dadurch gekennzeichnet, dass** die materialreduzierte Soll-Biege-Stelle jeweils durch beiderseits der ersten Laschen (18.1, 18.2) angeordnete Einbuchtungen (44) gebildet sind, die die Materialbreite der Basisfläche (10) verringern.

7. Statorkupplung nach einem der vorhergehenden Ansprüche, **dadurch gekennzeichnet, dass** die Basisfläche (10) mit den an dieser ansetzenden ersten Laschen (18) und zweiten Laschen (28) als einstückiges Stanz-Biege-Teil oder einstückiges Laser-Schweißteil hergestellt ist.

8. Statorkupplung nach einem der Ansprüche 1 bis 6, **dadurch gekennzeichnet, dass** die ersten Laschen (18) und/oder die zweiten Laschen (28) separat hergestellt und an der Basisfläche (10) befestigt, insbesondere angeschweißt sind.

9. Statorkupplung nach einem der vorhergehenden Ansprüche, **dadurch gekennzeichnet, dass** die Flansche (34) der zweiten Laschen (28) Flächendurchbrüche (36) zur Massereduzierung aufweisen.

10. Statorkupplung nach einem der vorhergehenden Ansprüche, **dadurch gekennzeichnet, dass** die zweiten Laschen (28) an geradlinigen Außenkanten der Basisfläche (10) ansetzen.

11. Statorkupplung nach einem der vorhergehenden Ansprüche, **dadurch gekennzeichnet, dass** die zweiten Laschen (28) zu einem gegen die Mitte der Statorkupplung offenen U-förmigen bzw. C-förmigen Profil gebogen sind.

12. Statorkupplung nach einem der vorhergehenden Ansprüche, **dadurch gekennzeichnet, dass** sich die zweiten Laschen (28) von dem jeweiligen zweiten Montagepunkt (42) als ebene Fläche bis zu der jeweils angrenzenden ersten Lasche (18) erstrecken.

## Claims

1. A stator coupling for the torsionally rigid connection of two components which allows radial and axial relative movements within tolerance limits, having a planar base surface (10), having first lugs (18.1, 18.2) which start at the base surface (10) and which have a pair of first assembly points (26.1, 26.2) arranged diametrical with respect to one another in a first axis (X axis) for fastening to the one component, and having second lugs (28) which start at the base surface (10), which are bent out of the plane of the base surface (10) and which have a pair of second assembly points (42.1, 42.2) arranged diametrical with respect to one another in a second axis (Y axis) for fastening to the other component, wherein the first axis (X axis) and the second axis (Y axis) extend approximately perpendicular to one another in the plane of the base surface (10) and wherein the base surface (10) has respective straight-line edges between the assembly points (26, 42),
**characterized in that** the second lugs (28.1, 28.2, 28.3, 28.4) start at the straight-line edges of the base surface (10) and bent edges (30, 32) parallel to the respective edge are bent away at least twice, whereby a flange (34.1, 34.2, 34.3, 34.4) surface-parallel to the base surface (10) is formed; and **in that** two respective second lugs (28.1 and 28.2 or 28.3 and 28.4 respectively), which start at edges following one another in the peripheral direction, overlap with the mutually facing ends of their flanges (34.1 and 34.2 or 34.3 and 34.4 respectively) or are connected thereto and these ends each together have one of the second assembly points (42.1 and 42.2 respectively).

2. A stator coupling in accordance with claim 1, **characterized in that** the first lugs are bent away perpendicular out of the plane of the base surface.

3. A stator coupling in accordance with one of the preceding claims, **characterized in that** the first lugs are inwardly or outwardly angled so that they have a flange for the assembly points which is surface-parallel to the plane of the base surface.

4. A stator coupling in accordance with any one of the preceding claims, **characterized in that** the base surface (10) has a polygonal, in particular a hexagonal contour; **in that** the first lugs (18.1, 18.2) start at two mutually oppositely disposed parallel sides of the base surface (10); and **in that** the second lugs (28.1, 28.2 and 28.3, 28.4 respectively) start at the sides of the base surface (10) contacting one another at two mutually opposite corners.

5. A stator coupling in accordance with any one of the preceding claims, **characterized in that** the base surface (10) has a respective material-reduced desired bending point between the first lugs (18.1 or 18.2 respectively) and the second lugs (28.1 and 28.3 or 28.2 and 28.4 respectively).

6. A stator coupling in accordance with claim 5, **characterized in that** the material-reduced desired bending point is respectively formed by indentations (44) arranged at both sides of the first lugs (18.1, 18.2) which indentations reduce the material width of the base surface (10).

7. A stator coupling in accordance with any one of the preceding claims, **characterized in that** the base surface (10) is manufactured with the first lugs (18) and second lugs (28) starting at it as a single-piece stamped bent part or as a single-piece laser welded part.

8. A stator coupling in accordance with any one of the claims 1 to 6, **characterized in that** the first lugs (18) and/or the second lugs (28) are manufactured separately and are fastened, in particular welded, to the base surface (10).

9. A stator coupling in accordance with any one of the preceding claims, **characterized in that** the flanges (34) of the second lugs (28) have surface openings (36) for the mass reduction.

10. A stator coupling in accordance with any one of the preceding claims, **characterized in that** the second lugs (28) start at straight-line outer edges of the base surface (10).

11. A stator coupling in accordance with any one of the preceding claims, **characterized in that** the second lugs (28) are bent to form a U-shaped or C-shaped section open toward the center of the stator coupling.

12. A stator coupling in accordance with any one of the preceding claims, **characterized in that** the second lugs (28) extend from the respective second assembly point (42) as a planar surface up to the respective adjacent first lug (18).

## Revendications

1. Couplage de stator destiné à la liaison solidaire en rotation de deux composants, qui permet des mouvements relatifs radiaux et axiaux à l'intérieur de limites de tolérance, comportant une surface de base plane (10), comprenant des premières pattes (18.1, 18.2) rapportées sur la surface de base (10), qui présentent une paire de premiers points de montage (26.1, 26.2) agencés diamétralement l'un par rapport à l'autre dans un premier axe (axe X) pour la fixation sur l'un des composants, et comprenant des secondes pattes (28) rapportées sur la surface de base (10) et cintrées hors du plan de la surface de base (10), qui présentent une paire de seconds points de montage (42.1, 42.2) agencés diamétralement l'un par rapport à l'autre dans un second axe (axe Y) pour la fixation sur l'autre composant, dans lequel le premier axe (axe X) et le second axe (axe Y) s'étendent dans le plan de la surface de base (10) approximativement perpendiculairement l'un par rapport à l'autre, et dans lequel la surface de base (10) présente des arêtes rectilignes respectivement entre les points de montage (26, 42),
**caractérisé en ce que** les secondes pattes (28.1, 28.2, 28.3, 28.4) sont rapportées sur les arêtes rectilignes de la surface de base (10) et sont cintrées au moins deux fois vers des arêtes de cintrage (30, 32) parallèles à l'arête respective, grâce à quoi il se forme une bride (34.1, 34.2, 34.3, 34.4) à surface parallèle à la surface de base (10), et **en ce que** deux pattes respectives (28.1 et 28.2, ou 28.3 et 28.4), qui sont rapportées sur des arêtes successives en direction périphérique, se chevauchent ou sont reliées avec les extrémités, tournées l'une vers l'autre, de leurs brides (34.1 et 34.2, ou 34.3 et 34.4), et ces extrémités comportent respectivement conjointement l'un des seconds points de montage (42.1 ou 42.2).

2. Couplage de stator selon la revendication 1, **caractérisé en ce que** les premières pattes sont cintrées perpendiculairement hors du plan de la surface de base.

3. Couplage de stator selon l'une des revendications précédentes, **caractérisé en ce que** les premières pattes sont coudées vers l'intérieur ou vers l'extérieur, de sorte qu'elles comportent une bride, à surface parallèle au plan de la surface de base, pour les points de montage.

4. Couplage de stator selon l'une des revendications précédentes, **caractérisé en ce que** la surface de base (10) présente un contour polygonal, en particulier hexagonal, **en ce que** les premières pattes (18.1, 18.2) sont rapportées sur deux côtés parallèles mutuellement opposés de la surface de base (10), et **en ce que** les secondes pattes (28.1, 28.2, ou 28.3, 28.4) sont rapportées sur les côtés, qui se rencontrent à deux coins mutuellement opposés, de la surface de base (10).

5. Couplage de stator selon l'une des revendications précédentes, **caractérisé en ce que** la surface de base (10) présente, entre les premières pattes (18.1 ou 18.2) et les secondes pattes (28.1 et 28.2, ou 28.2 et 28.4) un emplacement de flexion de consigne respectif où le matériau est réduit.

6. Couplage de stator selon la revendication 5, **caractérisé en ce que** les emplacements de flexion de consigne où le matériau est réduit sont formés respectivement par des creux (44) agencés des deux côtés des premières pattes (18.1, 18.2), qui réduisent la largeur du matériau de la surface de base (10).

7. Couplage de stator selon l'une des revendications précédentes, **caractérisé en ce que** la surface de base (10) est fabriquée, avec les premières pattes (18) et les secondes pattes (28) rapportées sur elle-même, sous la forme d'une pièce poinçonnée/pliée d'un seul tenant ou d'une pièce soudée par laser d'un seul tenant.

8. Couplage de stator selon l'une des revendications 1 à 6, **caractérisé en ce que** les premières pattes (18) et/ou les secondes pattes (28) sont fabriqués séparément et fixés sur la surface de base (10), en particulier soudées sur celle-ci.

9. Couplage de stator selon l'une des revendications précédentes, **caractérisé en ce que** les brides (34) des secondes pattes (28) présentent des traversées surfaciques (36) pour la réduction de leur masse.

10. Couplage de stator selon l'une des revendications précédentes, **caractérisé en ce que** les secondes pattes (28) sont rapportées sur des arêtes extérieures rectilignes de la surface de base (10).

11. Couplage de stator selon l'une des revendications précédentes, **caractérisé en ce que** les secondes pattes (28) sont cintrées pour donner un profil en forme de U ou en forme de C ouvert vers le milieu du couplage de stator.

12. Couplage de stator selon l'une des revendications précédentes, **caractérisé en ce que** les secondes pattes (28) s'étendent depuis le second point de montage respectif (42) sous la forme de surface plane jusqu'à la première patte respective adjacente (18).
